# EUROPEAN PATENT SPECIFICATION

(11) **EP 0 745 832 B1**
(45) Date of publication and mention of the grant of the patent: **21.04.2004**
(21) Application number: 95303666.2
(22) Date of filing: 30.05.1995
(51) Int. Cl.: G01F 11/28, G01F 3/36

(54) **A volumetric fluid dispensing apparatus**
Vorrichtung zur volumetrischen Abgabe von Flüssigkeiten
Dispositif pour la distribution volumique de fluides

(43) Date of publication of application: 04.12.1996
(73) Proprietor: IVEK CORPORATION, North Springfield, VT 05150 (US)
(72) Inventor: Keyes, Denis, Rocky Hill, New Jersey 08553 (US); Randall, John R., Jr., Freehold, New Jersey 07728 (US); Curcio, James, South Plainfield, New Jersey 07080 (US)
(74) Representative: Simons, Alison Diane

(56) References cited:
- EP-A- 0 541 501
- EP-A- 0 619 476
- DE-A- 2 113 711
- FR-A- 2 230 978
- US-A- 5 025 954
- US-A- 5 090 594

## Description

The present invention relates generally to fluid dispensing apparatus, and more particularly to a volumetric, pistonless fluid dispensing apparatus having no moving parts in contact with the fluid.

Numerous types of fluid dispensing apparatuses exist for filling bottles. One type of fluid dispensing apparatus which is in widespread use is positive displacement fillers. Positive displacement fillers typically include moving parts which contact and displace the fluid being dispensed. For example, one type of positive displacement filler uses a piston and cylinder arrangement. In this type of positive displacement filler, the backward movement of the piston draws fluid into the cylinder through an inlet port, and the forward movement of the piston expels the fluid through an outlet port. Another type of positive displacement filler uses a rotary pump to move the fluid.

Positive displacement pumps have gained widespread use in the United States for two reasons. First, positive displacement pumps can operate at relatively high speeds, filling as many as six hundred bottles per minute. Additionally, positive displacement pumps are accurate up to about ± 0.5%. However, there are distinct disadvantages associated with positive displacement pumps.

One disadvantage with positive displacement fillers is that the fluid comes into contact with moving parts. As the moving parts wear, particulate matter enters the fluid causing particulate contamination. If severe enough, particulate contamination can render the product unusable.

Another important disadvantage with positive displacement fillers involves the difficulty in cleaning and sterilizing the moving parts in contact with the fluid. In positive displacement pumps, the critical tolerances between parts, such as the piston and cylinder, precludes effective cleaning in place. Thus, the user must disassemble the apparatus for cleaning and sterilization. This process is not only time consuming, but may result in biological contamination of the parts when they are handled by the mechanic during reassembly.

Another type of fluid dispensing apparatus is the time/pressure filler. Generally speaking, the time/pressure filler includes a fluid chamber which is maintained under a relatively constant pressure. The fluid is dispensed from the chamber through a compressible line. Fluid flow is shut off by a pinch type valve which squeezes and collapses the discharge line. A predetermined volume of fluid is dispensed by opening the discharge line for a predetermined period of time and then closing the line. If the pressure within the fluid chamber is maintained constant, an equal amount of fluid should be dispensed each time the cycle is repeated. However, time/pressure fillers do not work as well in practice as they do in theory.

The primary difficulty with the time/pressure filling apparatuses is that the tubing is deformed to shut off fluid flow and does not always return to its undeformed state immediately, particularly when the apparatus has been sitting idle for a long period of time. Thus, the critical orifice through which the fluid is dispensed may vary somewhat from the fully open line. The variance in the critical orifice will cause the fluid flow through the discharge line to vary until the discharge line returns to its undeformed condition. As a result, time/pressure fillers will be less accurate during the first few filling cycles.

A third type of fluid dispensing apparatus is shown in U.S. Patent No. 5,090,594 which discloses a volumetric fluid dispensing apparatus. The volumetric dispensing apparatus comprises a measuring cup having an open top disposed within a fluid chamber. The measuring cup has a known volume. Fluid is trapped in the measuring cup by first filling the fluid chamber to a level above the open top of the measuring cup and then draining the fluid chamber until the fluid level drops below the top of the measuring cup. As the fluid in the chamber recedes, a premeasured quantity of fluid is trapped in the measuring cup. A discharge line in fluid communication with the measuring cup is then opened to dispense the fluid into a waiting receptacle.

Volumetric fluid dispensers, while slower than positive displacement fillers, are highly accurate and avoid the problems of microbial and particulate contamination often associated with positive displacement fillers. However, the accuracy of volumetric fluid dispensers decreases at extremely small volumes. Most of the error can be attributed to the formation of the meniscus at the open top of the measuring cup. Obviously, a flat meniscus will yield a lower fill volume, and a fuller meniscus would yield a larger fill volume. The formation of the meniscus is a function of both the specific gravity of the fluid being dispensed and the pressure within the fluid chamber. These factors may vary from one application to another. Also, at extremely small fill volumes, there is sometimes a problem with air being entrapped in the measuring cup by fluid flowing over the top of the measuring cup. Air bubble formation can also lead to error.

FR-A-2,230,978 discloses fluid dispensing apparatus having the features of the pre-characterizing portion of claim 1.

According to a first aspect of the present invention, there is provided apparatus for dispensing a predetermined fill volume of fluid comprising:
a closed fluid chamber containing the fluid to be dispensed;
a fill tube connected to the fluid chamber and forming a closed loop with the fluid chamber;
a fill valve disposed in said closed loop for controlling the flow of fluid from the fluid chamber into the fill tube;
sensing means for detecting the level of the fluid in the fill tube;
a discharge valve for dispensing fluid from the fill tube; and
an electronic controller responsive to said sensing means for selectively opening and closing the fill valve and the discharge valve to first transfer fluid from the fluid chamber to the fill tube and then to dispense fluid from the fill tube;
characterized in that the sensing means includes a meniscus sensor for measuring the height of the meniscus in the fill tube, and the controller is operative to calculate the volume of fluid dispensed based on the measured height of the meniscus before and after a first volume of fluid less than the predetermined fill volume is dispensed to calculate a subsequent volume of fluid to be dispensed to equal the predetermined fill volume and to open the discharge valve to dispense the subsequent volume of fluid so that the total volume dispensed is equal to the predetermined fill volume.

In a preferred embodiment, approximately 95% of the predetermined fill volume is first dispensed. The volume dispensed is determined by continuously monitoring the height of the meniscus in the fill tube. When approximately 95% of the predetermined fill volume has been dispensed, the fluid flow from the fill tube is stopped. The height of the meniscus is then measured again to determine the amount of deviation from the 95% reference. The controller then calculates the volume that, when added to the amount already dispensed, equals the predetermined fill volume. This method has the advantage of compensating for any errors which occur during the dispensing of the first 95%. Any error in the total fill volume can therefore be attributed to the final 5% which makes the total error very small.

Because there are no moving parts in contact with the fluid, the fluid dispensing apparatus virtually eliminates the risk of particulate contamination of the fluid. Additionally, the fluid dispensing apparatus can be cleaned and sterilized in place since there are no moving parts to be removed. The fluid dispensing apparatus achieves these advantages over positive displacement pumps without sacrificing accuracy. As volumetric principles are used to measure the quantity of fluid dispensed, the apparatus can achieve the same degree of accuracy as positive displacement fillers.

Advantageous features of the fluid dispensing apparatus are that it can accurately fill bottles and other receptacles to within ± 0.5% of the fill volume; is capable of filling bottles having volumes in the range of 0.1 cc to 1.0 litre; and is capable of filling up to 300 bottles per minute, while being simple in construction and reliable in operation.

According to a second aspect of the present invention, there is provided a method for dispensing a predetermined fill volume of a fluid comprising:
filling a fill tube having an outlet with the fluid;
measuring the height of the meniscus in the fill tube;
dispensing a first volume of fluid from the fill tube which is less than the predetermined fill volume;
measuring the height of the meniscus after said first volume of fluid is dispensed;
calculating the volume of fluid dispensed based on the height of the meniscus;
calculating a subsequent volume of fluid to be dispensed to equal the predetermined fill volume; and
dispensing the subsequent volume of fluid so that the total volume dispensed is equal to the predetermined fill volume.

In a preferred embodiment, the step of dispensing said first volume of fluid comprises opening a discharge valve in fluid communication with the fill tube for a predetermined time period.

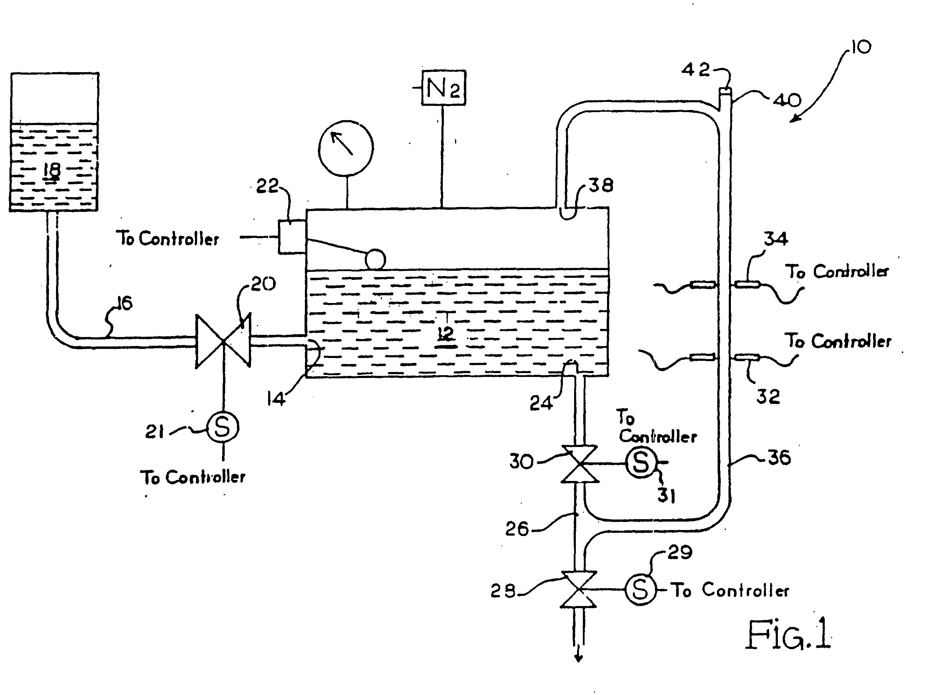

A preferred, non-limiting embodiment of the present invention will now be described with reference to the accompanying drawing, in which:-
Figure 1 is a schematic diagram illustrating an embodiment of the fluid-dispensing apparatus of the present invention.

Referring now to Figure 1, an embodiment of a dispensing apparatus of the present invention is shown therein and indicated generally by the numeral 10. The dispensing apparatus 10 includes a fluid chamber 12 having a fill port 14 which is connected by a fluid supply line 16 to a fluid source 18. The fluid chamber 12 is a closed tank which is not vented. The fill chamber 12 is charged with an inert gas, such as nitrogen. An inert gas is used to prevent reaction with the liquid being dispensed. The fluid chamber 12 is charged to a pressure of approximately 35 x 10³ Pascals (0 to 5 psi). The fluid supply line 16 includes a supply valve 20 which is activated by solenoid 21. A level control 22 monitors the level of fluid in the chamber 12. A programmable controller (not shown) is operatively connected to the level control 22 and solenoid 21. When the fluid level in the fluid chamber 12 drops below a predetermined level, the programmable controller opens supply valve 20 to introduce more fluid into the fluid chamber 12.

The fluid chamber includes a drain port 24 which is connected to a fill tube 36. Fill tube 36 forms a closed circuit with the fluid chamber 12 eliminating the need for external vents. The fill tube 36 is connected at one end to the drain port 24 in a lower portion of the fluid chamber 12. The opposite end of the fill tube 36 connects to a vent 38 in the upper portion of the fluid chamber 12. Thus, the fill tube 36 forms a closed loop with the fluid chamber 12. A fill valve 30 is disposed in the closed loop for controlling the flow of fluid from the fill chamber 12 to the fill tube 36. The fill valve 30 is controlled by solenoid 31 which is connected to the programmable controller.

A drain line 26 connects to the fill tube 36 for dispensing fluid from the fill tube 36 into a container. Drain line 26 includes a discharge (drain) valve 28 for dispensing fluid as will be hereinafter described. The drain valve 28 is controlled by a solenoid 29 which is activated by the programmable controller.

A pair of optical-level sensors 32 and 34 are disposed along the fill tube 36. Both sensors 32 and 34 must be disposed below the level of the fluid in the fluid chamber 12. The upper level sensor 34 defines an upper level of fluid in the fill tube 36. The lower-level sensor 32 defines a lower level of fluid. The volume of fluid dispensed is determined by the distance between the upper and lower level sensors 32 and 34, the diameter of the fill tube 36, and the N₂ pressure. Both sensors 32 and 34 are connected to the programmable controller.

A meniscus sensor 42 is included in addition to the level sensors 32 and 34. The meniscus sensor 42 is located in a tube extension 40 in the fill-tube loop. The meniscus sensor 42 is a laser-type sensor which measures the height of the meniscus in the fill tube 36. The output of the meniscus sensor 42 is transmitted to the programmable controller which uses the information to improve the accuracy of the fill volume.

The programmable controller controls the operation of the fluid dispensing apparatus 10. The dispensing cycle includes a filling stage during which the fill tube 36 is filled with fluid, and a dispense stage in which the fluid is dispensed into a container. At the start of a filling stage, the fluid level in the fill tube 36 is at the level of the first optical sensor 32. Drain valve 28 is closed and fill valve 30 is open so that fluid from the fluid chamber 12 flows into the fill tube 36. The fluid rises in the fill tube 36 until it reaches the level of the second optical sensor 34. Once the fluid reaches this level, the programmable controller closes the fill valve 30 and opens the drain valve 28. This marks the end of the filling stage and the beginning of the dispense stage. The fluid in the fill tube 36 then drains through the drain line 26 into a container.

During the dispensing stage of the cycle, variations in the height of the meniscus may cause some deviation in the volume of fluid dispensed. The meniscus sensor 42 is used to compensate for variations in the height of the meniscus. At the beginning of the dispense stage of the cycle, the height of the meniscus in the fill tube 36 is measured by' sensor 42 and stored in the programmable controller's memory.

A first predetermined volume (V₁) is dispensed which is equal to approximately 95% of the desired fill volume. After the first predetermined volume (V₁) is dispensed, the controller calculates the amount actually dispensed based on the position of the meniscus and determines the remaining volume (V_{R}) needed to equal the total fill volume. The discharge valve 28 is reopened to dispense the remaining volume (V_{R}) which is approximately 5% of the total fill volume. While dispensing the remaining 5%, the height of the meniscus is continuously measured and the volume dispensed (V₂) is calculated. When the amount dispensed (V₂) equals the remaining volume (V_{R}) calculated by the controller, the discharge valve 28 is closed. Alternatively, the remaining 5% could be dispensed by opening the discharge valve 28 for a predetermined time period which is calculated by the controller based on the pressure in the fluid chamber 12 and the specific gravity of the fluid.

From the foregoing description, it will be apparent that the fluid dispensing apparatus 10 provides an extremely accurate method for dispensing a predetermined volume of fluid. Further, by knowing the position of the meniscus before the dispensing stage begins, improvements in accuracy can be made by compensating for a smaller than normal meniscus. Also, the final position of the meniscus can be detected to provide a basis for rejecting out-of-range fill volumes on line as they occur.

The Figure 1 embodiment of the invention overcomes the disadvantages associated with positive displacement pumps since there are no moving parts. This virtually eliminates the possibility of particulate contamination. Further, the fluid dispensing apparatus according to the embodiment can be cleaned and sterilized in place without it having to be disassembled.

## Claims

1. An apparatus for dispensing a predetermined fill volume of fluid comprising:
a closed fluid chamber (12) containing the fluid to be dispensed;
a fill tube (36) connected to the fluid chamber (12) and forming a closed loop with the fluid chamber (12);
a fill valve (30) disposed in said closed loop for controlling the flow of fluid from the fluid chamber (12) into the fill tube (36);
sensing means (32, 34, 42) for detecting the level of the fluid in the fill tube (36);
a discharge valve (28) for dispensing fluid from the fill tube (36); and
an electronic controller responsive to said sensing means (32, 34, 42) for selectively opening and closing the fill valve (30) and the discharge valve (28) to first transfer fluid from the fluid chamber (12) to the fill tube (36) and then to dispense fluid from the fill tube (36);
**characterized in that** the sensing means includes a meniscus sensor (42) for measuring the height of the meniscus in the fill tube (36), and the controller is operative to calculate the volume of fluid dispensed based on the measured height of the meniscus before and after a first volume of fluid less than the predetermined fill volume is dispensed to calculate a subsequent volume of fluid to be dispensed to equal the predetermined fill volume and to open the discharge valve (28) to dispense the subsequent volume of fluid so that the total volume dispensed is equal to the predetermined fill volume.

2. The fluid dispensing apparatus of Claim 1 wherein the controller is operative to open the discharge valve (28) for a predetermined time period to dispense the subsequent volume of fluid.

3. The fluid dispensing apparatus of Claim 1 or 2 wherein the first volume of fluid is approximately 95% of the predetermined fill volume.

4. A method for dispensing a predetermined fill volume of a fluid comprising:
filling a fill tube (36) having an outlet (26) with the fluid;
measuring the height of the meniscus in the fill tube (36);
dispensing a first volume of fluid from the fill tube (36) which is less than the predetermined fill volume;
measuring the height of the meniscus after said first volume of fluid is dispensed;
calculating the volume of fluid dispensed based on the height of the meniscus;
calculating a subsequent volume of fluid to be dispensed to equal the predetermined fill volume; and
dispensing the subsequent volume of fluid so that the total volume dispensed is equal to the predetermined fill volume.

5. The method for dispensing a fluid of Claim 4 wherein the step of dispensing said first volume of fluid comprises opening a discharge valve (28) in fluid communication with the fill tube (36) for a predetermined time period.

6. The method for dispensing a fluid of Claim 4 wherein the step of dispensing the subsequent volume of fluid comprises calculating the time needed to dispense the subsequent volume of fluid, and opening a discharge valve (28) in fluid communication with the fill tube (36) for a time period equal to the calculated time period.

7. The method for dispensing a fluid of Claim 4 wherein the step of dispensing the subsequent volume of fluid comprises opening a discharge valve (28) in fluid communication with the fill tube (36) to dispense fluid from the fill tube, continuously measuring the height of the meniscus in the fill tube (36) as the fluid is dispensed, continuously calculating the volume dispensed based on the height of the meniscus in the fill tube, and closing the discharge valve (28) when the amount of fluid dispensed equals the subsequent volume of fluid.

8. The method for dispensing a fluid of any one of Claims 4 to 7 wherein the first volume of fluid is approximately 95% of the predetermined fill volume.

## Patentansprüche

1. Vorrichtung zur Abgabe eines vorbestimmten Fluidfüllvolumens, mit Folgendem:
einer geschlossenen Fluidkammer (12), die das abzugebende Fluid enthält;
einem mit der Fluidkammer (12) verbundenen Füllrohr, das mit der Fluidkammer (12) eine geschlossene Schleife bildet;
einem in der geschlossenen Schleife angeordneten Füllventil (30) zur Steuerung des Fluidstroms von der Fluidkammer (12) in das Füllrohr (36);
einem Erfassungsmittel (32, 34, 42) zur Erfassung des Füllstands des Fluids im Füllrohr (36);
einem Ablassventil (28) zur Abgabe von Fluid aus dem Füllrohr (36); und
einer elektronischen Steuerung, die auf das Erfassungsmittel (32, 34, 42) mit dem gezielten Öffnen und Schließen des Füllventils (30) und des Ablassventils (28) reagiert, um zunächst Fluid aus der Fluidkammer (12) zum Füllrohr (36) zu übertragen und dann Fluid aus dem Füllrohr (36) abzugeben;
**dadurch gekennzeichnet, dass** das Erfassungsmittel einen Meniskussensor (42) zum Messen der Höhe des Meniskus im Füllrohr (36) enthält und die Steuerung das abgegebene Fluidvolumen auf Grundlage der gemessenen Höhe des Meniskus, bevor und nachdem ein erstes Fluidvolumen, das kleiner ist als das vorbestimmte Füllvolumen, abgegeben wird, berechnet, um ein anschließendes abzugebendes Fluidvolumen zu berechnen, das gleich dem vorbestimmten Füllvolumen ist, und das Ablassventil (28) öffnet, um das anschließende Fluidvolumen abzugeben, so dass das abgegebene Gesamtvolumen dem vorbestimmten Füllvolumen entspricht.

2. Fluidabgabevorrichtung nach Anspruch 1, bei dem die Steuerung das Ablassventil (28) für eine vorbestimmte Zeitdauer öffnet, um das anschließende Fluidvolumen abzugeben.

3. Fluidabgabevorrichtung nach Anspruch 1 oder 2, bei dem das erste Fluidvolumen ca. 95% des vorbestimmten Füllvolumens beträgt.

4. Verfahren zur Abgabe eines vorbestimmten Fluidfüllvolumens, bei dem man:
ein Füllrohr (36) mit einem Auslass (26) mit dem Fluid füllt;
die Höhe des Meniskus im Füllrohr (36) misst;
ein erstes Fluidvolumen aus dem Füllrohr (36) abgibt, das kleiner ist als das vorbestimmte Füllvolumen;
die Höhe des Meniskus nach Abgabe des ersten Fluidvolumens misst;
das abgegebene Fluidvolumen auf Grundlage der Höhe des Meniskus berechnet;
ein anschließendes abzugebendes Fluidvolumen so berechnet, dass es dem vorbestimmten Fluidvolumen entspricht; und
das anschließende Fluidvolumen abgibt, so dass das abgegebene Gesamtvolumen dem vorbestimmten Füllvolumen entspricht.

5. Verfahren zur Abgabe eines Fluids nach Anspruch 4, bei dem man bei der Abgabe des ersten Fluidvolumens ein mit dem Füllrohr (36) in Strömungsverbindung stehendes Ablassventil (28) für eine vorbestimmte Zeitdauer öffnet.

6. Verfahren zur Abgabe eines Fluids nach Anspruch 4, bei dem man bei der Abgabe des anschließenden Fluidvolumens die Zeit berechnet, die zur Abgabe des anschließenden Fluidvolumens erforderlich ist, und ein mit dem Füllrohr (36) in Strömungsverbindung stehendes Ablassventil (28) für eine Zeitdauer öffnet, die gleich der berechneten Zeitdauer ist.

7. Verfahren zur Abgabe eines Fluids nach Anspruch 4, bei dem man bei der Abgabe des anschließenden Fluidvolumens ein mit dem Füllrohr (36) in Strömungsverbindung stehendes Ablassventil (28) öffnet, um Fluid aus dem Füllrohr abzugeben, während der Abgabe des Fluids die Höhe des Meniskus im Füllrohr (36)' kontinuierlich misst, das abgegebene Volumen auf Grundlage der Höhe des Meniskus im Füllrohr kontinuierlich berechnet und das Ablassventil (28) schließt, wenn die abgegebene Fluidmenge dem anschließenden Fluidvolumen entspricht.

8. Verfahren zur Abgabe eines Fluids nach einem der Ansprüche 4 bis 7, bei dem das erste Fluidvolumen ca. 95% des vorbestimmten Füllvolumens entspricht.

## Revendications

1. Dispositif pour doser un volume prédéterminé de fluide de remplissage, comprenant :
une chambre de fluide fermée (12) contenant le fluide à doser ;
un tuyau de remplissage (36) relié à la chambre (12) de fluide et formant un circuit fermé avec la chambre (12) de fluide ;
une vanne de remplissage (30) disposée sur ledit circuit fermé pour réguler l'écoulement du fluide depuis la chambre de fluide (12) dans le tube de remplissage (36) ;
un moyen de détection (32, 34, 42) adapté pour détecter le niveau du fluide dans le tuyau de remplissage (36) ;
une vanne de refoulement (28) adaptée pour doser le fluide provenant du tuyau de remplissage (36) ; et
une unité de commande électronique réagissant audit moyen de détection (32, 34, 42) pour ouvrir et fermer de manière sélective la vanne de remplissage (30) et la vanne de refoulement (28) pour, tout d'abord, transférer le fluide de la chambre (12) de fluide vers le tuyau de remplissage (36), puis pour doser le fluide à partir du tuyau de remplissage (36) ;
**caractérisé en ce que** le moyen de détection comporte un détecteur de ménisque (42) servant à mesurer la hauteur du ménisque dans le tuyau de remplissage (6), et l'unité de commande est adaptée pour calculer le volume de fluide dosé d'après la hauteur du ménisque mesurée avant et après qu'un premier volume de fluide, inférieur au volume de remplissage prédéterminé, a été dosé pour calculer un volume ultérieur de fluide à doser de façon à égaler le volume de remplissage prédéterminé, et pour ouvrir la vanne de refoulement (28) afin de doser le volume ultérieur de fluide afin que le volume total dosé soit égal au volume de remplissage prédéterminé.

2. Dispositif de dosage de fluide selon la revendication 1, dans lequel l'unité de commande est adaptée pour ouvrir la vanne de refoulement (28) pendant un laps de temps prédéterminé pour doser le volume ultérieur de fluide.

3. Dispositif de dosage de fluide selon la revendication 1 ou 2, dans lequel le premier volume de fluide est égal à environ 95 % du volume de remplissage prédéterminé.

4. Procédé pour doser un volume de remplissage prédéterminé d'un fluide, comprenant les étapes consistant à :
remplir avec le fluide un tuyau de remplissage (36) comportant une sortie (26) ;
mesurer la hauteur du ménisque dans le tuyau de remplissage (36) ;
doser, à partir du tuyau de remplissage (36), un premier volume de fluide inférieur au volume de remplissage prédéterminé ;
mesurer la hauteur du ménisque après le dosage dudit premier volume de fluide ;
calculer le volume de fluide distribué d'après la hauteur du ménisque ;
calculer un volume ultérieur de fluide à doser afin d'égaler le volume de remplissage prédéterminé ; et
doser le volume ultérieur de fluide de façon que le volume total dosé soit égal au volume de remplissage prédéterminé.

5. Procédé de dosage d'un fluide selon la revendication 4, dans lequel l'étape de dosage dudit premier volume de fluide comprend l'ouverture pendant un laps de temps prédéterminé d'une vanne de refoulement (28) en communication de fluide avec le tuyau de remplissage (36).

6. Procédé pour doser un fluide selon la revendication 4, dans lequel l'étape de dosage du volume ultérieur de fluide comprend le calcul du temps nécessaire pour doser le volume ultérieur de fluide, et l'ouverture, pendant un laps de temps égal au laps de temps calculé, une vanne de refoulement (28) en communication de fluide avec le tuyau de remplissage (36).

7. Procédé pour doser un fluide selon la revendication 4, dans lequel l'étape de dosage du volume ultérieur de fluide comprend l'ouverture d'une vanne de refoulement (28) en communication de fluide avec le tuyau de remplissage (36) afin de doser le fluide à partir du tuyau de remplissage, la mesure en continu de la hauteur du ménisque dans le tuyau de remplissage (36) au fur et à mesure du dosage du fluide, le calcul en continu du volume dosé d'après la hauteur du ménisque dans le tuyau de remplissage et la fermeture de la vanne de refoulement (28) lorsque la quantité de fluide dosé est égal au volume ultérieur de fluide.

8. Procédé pour doser un fluide selon l'une quelconque des revendications 4 à 7, dans lequel le premier volume de fluide est égal à environ 95 % du volume de remplissage prédéterminé.
